# EUROPÄISCHE PATENTSCHRIFT

(11) **EP 1 068 520 B1**
(45) Veröffentlichungstag und Bekanntmachung des Hinweises auf die Patenterteilung: **02.10.2002**
(21) Anmeldenummer: 99915709.2
(22) Anmeldetag: 26.03.1999
(51) Int. Cl.: G01N 27/447

(54) **VORRICHTUNG UND VERFAHREN ZUR PROBENAUFNAHME AUS POLYMEREN TRÄGERMATERIALIEN**
DEVICE AND METHOD FOR COLLECTING SAMPLES IN POLYMER SUPPORT MATERIALS
DISPOSITIF ET PROCEDE POUR PRELEVER DES ECHANTILLONS DANS DES MATERIAUX SUPPORTS POLYMERES

(30) Priorität: 06.04.1998 DE 19815400
(43) Veröffentlichungstag der Anmeldung: 17.01.2001
(73) Patentinhaber: Max-Planck-Gesellschaft zur Förderung der Wissenschaften e.V., 80539 München (DE)
(72) Erfinder: GAUSS, Christine, D-82538 Geretsried (DE); HORN, Martin, D-14052 Berlin (DE); KALKUM, Markus, D-10967 Berlin (DE); EICKHOFF, Holger, D-14195 Berlin (DE)
(74) Vertreter: Hertz, Oliver, Dr.
(86) Internationale Anmeldenummer: EP9902059
(87) Internationale Veröffentlichungsnummer: WO99051977

(56) Entgegenhaltungen:
- EP-A- 0 810 438
- WO-A-94/08234
- WO-A-99/30168
- GB-A- 2 067 126
- US-A- 5 587 062

## Beschreibung

Die Erfindung betrifft eine Probenaufnahmevorrichtung, die zur Aufnahme oder Übertragung einer Vielzahl von Proben aus polymeren Trägermaterialien eingerichtet ist, und ein Verfahren zum Einsatz einer derartigen Probenaufnahmevorrichtung. Die Erfindung betrifft insbesondere die Probenaufnahme durch Abtrennen von Teilbereichen mit bestimmten Substanzen aus Trägermaterialien, wie z.B. das Ausstechen von Substanzbanden aus Trenngelen.

Aus der Chemie, Biologie, Medizin und molekularen Biotechnologie sind allgemein zahlreiche Trennverfahren bekannt, bei denen Substanzgemische in einem Trägermedium substanzspezifisch räumlich getrennt und anschließend weiteren Verarbeitungsschritten unterzogen werden. Im Bereich der Genomforschung werden zur Trennung beispielsweise von Proteingemischen, Genomsequenzen oder DNS-Gemischen, elektrophoretische Trennverfahren mit ein- oder mehrdimensionalen Trenngelen verwendet.

Bei der zweidimensionalen Gelelektrophorese werden beispielsweise Proteine bei einem ersten Trennschritt in einer ersten Dimension nach ihrem Säure- oder Basencharakter und bei einem zweiten Trennschritt in einer zweiten Dimension größenabhängig getrennt. Im Ergebnis befinden sich die getrennten Fragmente in einem sogenannten zweidimensionalen Gel, das die Form einer Gelschicht einer Fläche von rd. 8 cm · 12 cm bis 20 cm · 30 cm und einer Dicke von rd. 0,5 mm bis 1 mm besitzt. Nach der Trennung werden die Fragmente zur Visualisierung mit organischen (konventionelle Farbstoffe wie z.B. Coomassieblau, Fluoreszenzfarbstoffe) oder anorganischen Substanzen (z.B. Silberfärbung) gefärbt, so daß sich Banden, Flecken oder unregelmäßig geformte Spots bilden. Im folgenden werden die getrennten Fragmente in einem Trägermedium generell als Banden bezeichnet. Die Banden sind in dem zweidimensionalen Gel je nach Substanzeigenschaften unregelmäßig verteilt. Zur weiteren Verarbeitung oder Analyse der getrennten Fragmente wurden-bisher die Banden manuell oder halbautomatisch mit einem Skalpell aus dem Gel ausgeschnitten, um dann spezifisch, z.B. mit der Massenspektrometrie, weitere Untersuchungen vorzunehmen.

Bei den genannten Anwendungen in der Genomforschung, aber auch z.B. in der modernen kombinatorischen Chemie, besteht ein Interesse daran, in möglichst kurzen Zeiten eine möglichst große Anzahl von Substanzen zu trennen und die getrennten Fragmente oder Proben weiter zu bearbeiten. Sowohl die Trenntechnik als auch die weitere analytische Untersuchung der Proben lassen heute einen hohen Probendurchsatz zu. Die Übertragung der getrennten Fragmente auf Substrate, die den Ausgangspunkt für die weitere Verarbeitung darstellen, stellt bisher jedoch einen Engpaß dar.

Aus US-A-587 062 ist eine Vorrichtung zur Aufnahme von Proben aus einem elektrophoretischen Trenngel bekannt. Die Vorrichtung enthält ein Ausstechwerkzeug, das über einem Trägertisch, auf dem das Trenngel angeordnet ist, verfahrbar und zur Probenaufnahme betätigbar ist.

Die Aufgabe der Erfindung ist es, eine Vorrichtung und ein Verfahren zur Probenaufnahme anzugeben, die dahingehend verbessert sind, daß eine größere Anzahl von Proben simultan verarbeitet werden kann. Die Erfindung ist insbesondere auf Anwendungen bei gelelektrophoretischen Trennverfahren gerichtet.

Diese Aufgabe wird durch eine Vorrichtung und ein Verfahren mit den Merkmalen gemäß den Patentansprüchen 1 bzw. 10 gelöst. Bevorzugte Ausführungsformen der Erfindung ergeben sich aus den abhängigen Ansprüchen.

Die Grundidee der Erfindung besteht in der Schaffung einer Probenaufnahmevorrichtung mit einer Vielzahl von einzeln betätigbaren Trennwerkzeugen, die gemeinsam in einer Bezugsebene mit Abstand von einem Material, aus dem Proben entnommen werden sollen, verfahrbar sind und selektiv hin zu dem Material bewegt bzw. betätigt werden können. Die Probentrennung aus dem Material erfolgt vorzugsweise seriell. Dies bedeutet, daß die Probenaufnahmevorrichtung immer abwechselnd zu einer bestimmten Position in der Bezugsebene verfahren und dann eines der Trennwerkzeuge zur Probenbeladung betätigt wird. Zum Verfahren in der Bezugsebene ist die Probenaufnahmevorrichtung mit einer Stelleinrichtung versehen. Die Probenübertragung auf ein Zielsubstrat kann dann aus allen Trennwerkzeugen gleichzeitig und parallel erfolgen.

Die Steuerung der Probenaufnahmevorrichtung erfolgt vorzugsweise in Kombination mit einem Bildaufnahmesystem. Das Bildaufnahmesystem enthält eine Kameraeinrichtung, mit der die Probenpositionen (z.B. Bandenpositionen) erfaßt werden. Aus den Probenpositionen werden Zielkoordinaten für jede Verfahrbewegung der Stelleinrichtung abgeleitet. Die Kombination einer Probenaufnahmevorrichtung (mit einer Vielzahl von Trennwerkzeugen) mit einem Bildaufnahmesystem stellt ein wesentliches Merkmal der Erfindung dar, da dies eine Automatisierung und Beschleunigung des gesamten Probenaufnahmevorgangs ermöglicht.

Die Erfindung ist allgemein bei allen Vorgängen anwendbar, bei denen Proben aus einem Träger- oder Probenmaterial entnommen und auf ein Zielsubstrat übertragen werden sollen. Unter Probenaufnahme wird deshalb allgemein das Abtrennen (z.B. Ausschneiden, Stechen, Stanzen oder dgl.) der Probe aus dem Material und das Ablegen der abgetrennten Probe in vorbestimmter Weise auf einem Zielsubstrat verstanden. Die Erfindung läßt sich besonders gut mit polymeren Trägermaterialien (schichtoder volumenförmig) oder mit anderen Materialien (z.B. Membranen oder auf Substraten angeordneten biologischen Materialien wie z.B. Zellhaufen) anwenden. Das Zielsubstrat ist vorzugsweise eine Mikrotiterplatte. Eine bevorzugte Anwendung der Erfindung besteht in der gesteuerten Entnahme von Proben aus Trenngelen, wobei die Entnahmepositionen durch die Bildverarbeitung in vorbestimmter Weise festgelegt sind und das Anfahren der Entnahmepositionen und die Probenentnahme mit den Trennwerkzeugen (Stechkapillaren) sequentiell erfolgt, und in der Übertragung der entnommenen Proben in die Vertiefungen einer Mikrotiterplatte, wobei für die Übertragung eine zeitlich parallele Probenablage in den Vertiefungen vorgesehen ist.

Weitere Einzelheiten und Vorteile der Erfindung werden im folgenden unter Bezug auf die Figuren beschrieben. Es zeigen:
- Fig. 1: eine Perspektivansicht einer erfindungsgemäßen Probenaufnahmevorrichtung; und
- Fig. 2: eine schematische Übersichtsdarstellung zur Illustration des erfindungsgemäßen Verfahrens.

Die Erfindung wird im folgenden unter Bezug auf eine Probenaufnahmevorrichtung mit einer Reihe von Trennwerkzeugen beschrieben, die acht kapillarförmige Stechwerkzeuge umfaßt. Die Erfindung ist jedoch nicht auf diese Ausführungsform beschränkt, sondern mit anders geformten Trennwerkzeugen, mit matrixartig reihen- und spaltenweise angeordneten Trennwerkzeugen, oder mit einer anwendungsabhängig veränderten Anzahl der Trennwerkzeuge implementierbar.

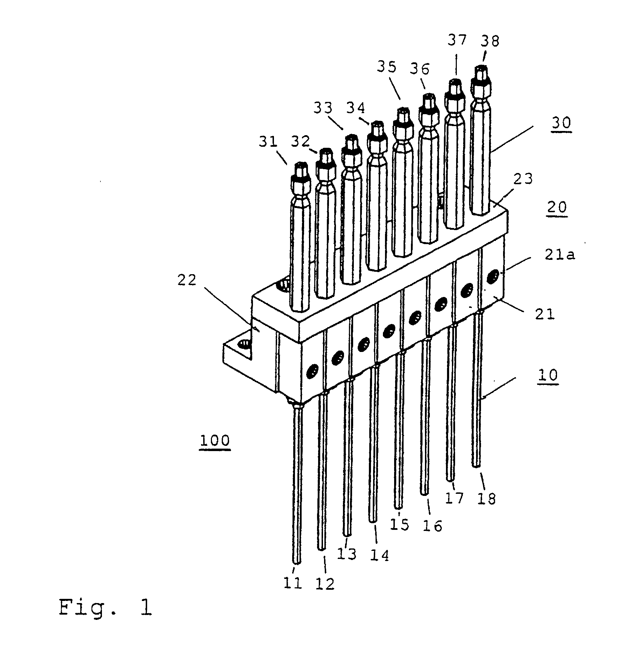

Eine erfindungsgemäße Probenaufnahmevorrichtung 100 umfaßt gemäß Fig. 1 eine Vielzahl von Trennwerkzeugen 10, eine Halteeinrichtung 20 und eine Vielzahl von Betätigungsmitteln 30.

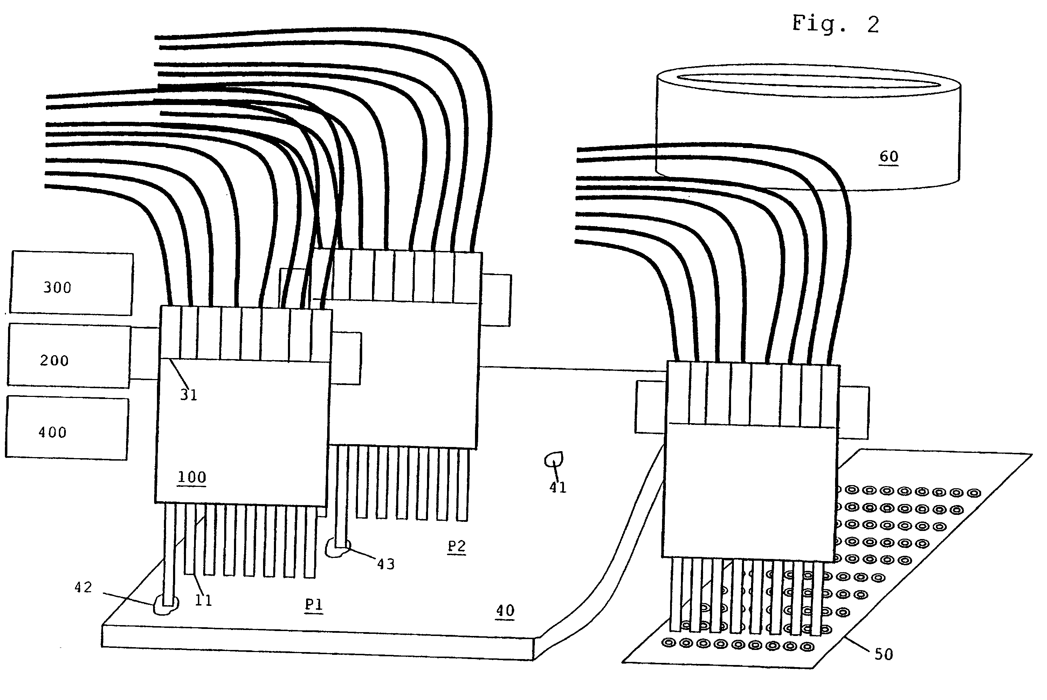

Die Trennwerkzeuge 10 umfassen rohrförmige Stech- oder Stanzwerkzeuge z.B. in Form von Stechkapillaren 11 bis 18. Alternativ könnten auch andere Schneidwerkzeuge vorgesehen sein. Jedes Stechwerkzeug ist an einem Ende mit einem Führungsteil 21 der Halteeinrichtung 20 in axialer Richtung verschiebbar verbunden. Am anderen Ende jedes Stechwerkzeugs ist eine Schneide vorgesehen. Die Querschnittsgestalt, die geometrischen Dimensionen und die gegenseitige Anordnung der Stechwerkzeuge werden anwendungsabhängig festgelegt. Für Probenaufnahmen an Trenngelen wird jedes Stechwerkzeug vorzugsweise durch eine Kapillare gebildet, an deren Ende die Schneide durch das Ende der Kapillarwand gegeben ist. Der Innendurchmesser der Kapillare wird anwendungsabhängig ausgewählt und ist vorzugsweise geringer als die Dicke des Materials (Trenngel, Membran oder dgl.), aus dem die Proben entnommen werden sollen. Bei üblichen zweidimensionalen Trenngelen beträgt der Innendurchmesser vorzugsweise rd. 0,5 bis 2 mm, z.B. rd. 1 mm. Die Dicke und das Material der Kapillarwand wird zur Erzielung einer genügenden Widerstandsfähigkeit beim Abtrennvorgang ausgewählt. Die Kapillare kann aus einem inerten Material wie z.B. Metall, Glas, Keramik oder Kunststoff bestehen. Stahlkapillaren werden wegen der hohen Widerstandsfähigkeit bevorzugt. Der gegenseitige Abstand zwischen den Kapillaren wird anwendungsabhängig an die Bedingungen des Zielsubstrats angepaßt. Ist das Zielsubstrat beispielsweise eine Mikrotiterplatte (siehe Fig. 2), so entspricht der Kapillarabstand dem Reservoirabstand der Mikrotiterplatte (z.B. 9 mm).

Die Halteeinrichtung 20 besteht aus den Führungsteilen 21, einer Anschlußplatte 22 und einer Halteplatte 23. Die Anschlußplatte 22 ist zur Verbindung der Halteeinrichtung 20 mit einer (nicht dargestellten) Stelleinrichtung vorgesehen. Die Stelleinrichtung ist zur Bewegung der Probenaufnahmevorrichtung in eine Bezugsebene zu bestimmten Zielkoordinaten eingerichtet, wie dies unten erläutert wird. Die Halteplatte 23 dient der gemeinsamen Halterung der Führungsteile 21 und der Betätigungsmittel 30 mit der Anschlußplatte 22.

Für jedes Trennwerkzeug (z.B. für jede Kapillare) ist ein Führungsteil 21 vorgesehen, das eine Doppelfunktion besitzt. Erstens wird durch das Führungsteil 21 die axiale Beweglichkeit der Trennwerkzeuge von einer Grundposition in eine Stechposition festgelegt. Außerdem enthält jedes Führungsteil 21 eine Anschlußöffnung 21a, über die das jeweilige Trennwerkzeug von einem Drucksystem (nicht dargestellt) mit einem Druck oder auch mit einem Unterdruck beaufschlagt werden kann. Der Unterdruck dient dem Festhalten der ausgestochenen Probe im Trennwerkzeug. Sollen die Proben auf dem Zielsubstrat abgelegt werden, wird der Unterdruck durch einen geringen Überdruck (jeweils z.B. rund ½ at bzw. 5.10⁻⁶ Pa) ersetzt. Die Anschlußöffnung 21a kann ferner zur Zuführung einer Spülflüssigkeit genutzt werden.

Zur Vermeidung einer Probenwanderung in der Kapillare kann in deren Inneren eine Rückhalteeinrichtung vorgesehen sein, die ein Probenvolumen am Kapillarende von der übrigen Kapillare abgrenzt und z.B. durch einen Stift in der Kapillare gebildet wird.

Die Betätigungsmittel 30 umfassen eine Gruppe von Pneumatikzylindern 31, 32, ..., 38, die jeweils einem Trennwerkzeug zugeordnet sind. Die Pneumatikzylinder sind druckluftbetrieben und enthalten jeweils elektrische Schaltventile. Wird ein vorbestimmter Pneumatikzylinder durch Betätigung des elektrischen Schaltventils aktiviert, so wird das zugehörige Trennwerkzeug in axialer Richtung um einen Vortriebsabstand verschoben. Nach dem Ausstechvorgang erfolgt der Rückzug des Trennwerkzeugs unter Wirkung eines internen Federelements oder einer externen Rückstellfeder oder auch druckbetrieben. Ein wesentlicher Vorteil der Erfindung besteht darin, daß die Trennwerkzeuge oder Ausstechwerkzeuge einzeln ansteuerbar sind und somit die Probenaufnahme an beliebige Probenformate angepaßt werden kann.

Anstelle der Pneumatikzylinder können die Betätigungsmittel 30 andere Antriebseinheiten wie z.B. hydraulische (mit Hydraulikzylinder), piezoelektrische oder elektromagnetische Antriebe enthalten.

Die Halteeinrichtung 20 ist derart mit der Stelleinrichtung verbunden, daß die Richtung der axialen Bewegung der Trennwerkzeuge im wesentlichen senkrecht auf der (Fahr-)Bezugsebene der Stelleinrichtung steht.

Ein Probenaufnahmeverfahren wird im folgenden unter Bezug auf Fig. 2 erläutert. Fig. 2 zeigt schematisch die Probenaufnahmevorrichtung 100 in verschiedenen Verfahrensphasen und die Stelleinrichtung 200, eine Bildaufnahmeeinrichtung 300 und eine Steuereinrichtung 400 am Beispiel der Probenaufnahme aus einem Trenngel 40. Für die Stell- und Steuereinrichtungen können an sich bekannte Anordnungen auf der Grundlage sogenannter "Spotting- und Picking-"Roboter verwendet werden. Die Steuereinrichtung 400 liefert Zielkoordinaten an die Stelleinrichtung 200, an die jeweils die Probenaufnahmevorrichtung 100 gefahren werden soll. Die Zielkoordinaten werden wie folgt mit Hilfe der Bildaufnahmeeinrichtung 300 gewonnen. Als Trenngel 40 ist beispielhaft ein zweidimensionales Gel auf einem ebenen Substrat dargestellt. Alternativ kann die Erfindung entsprechend auch mit eindimensionalen Gelen, z.B. in Schicht- oder Streifenform, implementiert werden.

Die Bildaufnahmeeinrichtung 300 enthält eine Kamera (nicht dargestellt), mit der ein Digitalbild des zweidimensionalen Gels 40 mit den regelmäßig oder unregelmäßig angeordneten, gefärbten Banden 41 erstellt wird. Die Kamera ist vorzugsweise wie die Probenaufnahmevorrichtung mit der Stelleinrichtung verbunden und über dem zweidimensionalen Gel in der Bezugsebene (x-y-Ebene) parallel zur Ebene des Gels 40 verfahrbar. Das Digitalbild wird in der Steuereinrichtung 400 ausgewertet. Die Bildauswertung bezieht sich vorteilhafterweise nicht notwendig auf definierte Markierungen auf dem Trenngelsubstrat, sondern auf die im Trenngel getrennten Banden oder Spots. Mit der Erfindung konnte erstmalig gezeigt werden, daß auch diese Banden oder Spots, die einen variablen Kontrast gegenüber der Umgebung besitzen können, zur Bildaufnahme und -auswertung geeignet sind. Bei größeren Banden oder Spots können sogar mehrere Ausstechvorgänge vorgesehen sein (z.B. Spotdurchmesser 2 mm, Stechkapillarendurchmesser rd. 1 mm: 2 bis 3 Ausstechvorgänge pro Spot). In der Steuereinrichtung ist ein Programmablauf vorgesehen, der in Abhängigkeit von der Bandengröße die Zielkoordinaten bestimmt und festlegt, wie oft benachbarte Gelstücke aus einer Bande entnommen werden sollen. Die Zielkoordinaten beziehen sich auf die Position der Probenaufnahmevorrichtung 100 in Bezug auf eine Bande im zweidimensionalen Gel unter Berücksichtigung der Relativkoordinaten der jeweils anzuwählenden Stechkapillare. Ein wesentlicher Gesichtspunkt der Erfindung besteht darin, daß nach der Bildaufnahme und -verarbeitung bzw. -auswertung eine automatische Probenaufnahme der gewünschten Proben aus dem Trenngel mit den Stechkapillaren in zeitlicher Abfolge durchgeführt wird. Vorteilhafterweise kann die gesamte Bilderkennung automatisiert erfolgen. Eine operatorgesteuerte Kamerakontrolle ist nicht zwingend erforderlich. Die Ausstechpositionen sind entsprechend dem Trennergebnis anwendungsabhängig unregelmäßig und nicht als vorbestimmtes Muster verteilt. Durch den Einsatz der Bildaufnahmeeinrichtung 300, die als optische Positioniereinrichtung benutzt wird, ist auch bei der unregelmäßigen Bandenoder Spotverteilung ein zielgerichtetes Ausstechen möglich.

Mit der Stelleinrichtung 200 ist die Probenaufnahmevorrichtung so angeordnet, daß der Abstand der Stechkapillaren vom Substrat, auf dem sich das Gel befindet, in ihrer Grundposition im wesentlichen gleich dem Vortriebsabstand der Betätigungsmittel (s. oben) entspricht.

Nach Aufnahme des Digitalbildes und Ermittlung der Zielkoordinaten wird die Probenaufnahmevorrichtung 100 zunächst in die erste Position P1 gefahren, an der eine der Stechkapillaren (z.B. 11) in Bezug auf eine bestimmte Bande 42 im Trenngel ausgerichtet ist. Sobald die Position P1 erreicht ist, wird der Pneumatikzylinder 31 betätigt, so daß die Stechkapillare 11 in das Gel geschossen wird und die Probe am Kapillarende aufgenommen wird. Anschließend fährt die Stelleinrichtung 200 die Probenaufnahmevorrichtung 100 zur nächsten Position P2, wo der gleiche Vorgang mit der nächsten Stechkapillare (z.B. 12) wiederholt wird. Die Position P2 kann sich auf eine Probe in derselben Bande 42 oder in einer anderen Bande 43 beziehen. In dieser Weise werden Positionen P1 bis P8 entsprechend der Zahl der Stechkapillaren angefahren (P3 bis P8 nicht dargestellt). Die Stechkapillaren werden somit an den Positionen P1 bis P8 sequentiell beladen. Die sequentiell beladenen Stechkapillaren müssen nicht unbedingt in der Reihenfolge ihrer Anordnung beladen werden.

Anschließend wird, wenn alle oder anwendungsabhängig einige Stechkapillaren beladen sind, die Probenaufnahmevorrichtung zu einem Zielsubstrat z.B. in Form einer Mikrotiterplatte 50 gefahren. Die Probenaufnahmevorrichtung 100 wird so positioniert, daß die Enden der Stechkapillaren jeweils den Reservoiren der Mikrotiterplatte 50 gegenüberliegen. Durch Druckbeaufschlagung der Stechkapillaren werden die einzelnen Proben in den Reservoiren abgelegt. Die Ablage der Proben auf der Mikrotiterplatte 50 erfolgt für alle Stechkapillaren gleichzeitig bzw. parallel. Die Ablage der Proben ist vorteilhafterweise probenspezifisch. Dies bedeutet, daß jede einzelne Probe oder Gruppen von Proben, die einer gemeinsamen Bande entsprechen, in einzelnen Reservoiren separat abgelegt werden. Die Proben werden in ein geordnetes Raster übertragen, an dem die weitere Auswertung bzw. Analyse erfolgt. Anschließend erfolgt gegebenenfalls unter Zwischenschaltung eines Reinigungsschritts an einem Reinigungsbad 60 die nächste Sequenz der Probenaufnahme am Probensubstrat 40. Die sequentielle Probenaufnahme an den Stechkapillaren und parallele Probenablage wird so oft wiederholt, bis alle Banden aus dem Trenngel ausgestochen sind.

Das in den Figuren 1 und 2 gezeigte System kann dahingehend modifiziert werden, daß nicht eine gerade Reihe von Trennwerkzeugen, sondern gekrümmte Reihe oder eine Matrixanordnung von Trennwerkzeugen bereitgestellt wird. Außerdem kann vorgesehen sein, daß während einer Probeaufnahmesequenz von einer Stechkapillare mehrere Probenstücke in Folge aufgenommen werden. Es ist sogar bei entsprechend angepaßter Probenablage möglich, daß in einer Stechkapillare mehrere Proben von verschiedenen Banden aufgenommen werden. Bei Mehrfachbeladung von Stechkapillaren kann vorgesehen sein, zwischen den Proben Trennstücke z.B. aus einem Gelbereich ohne Probe aufzunehmen. Schließlich können an einer Position (P1, P2, ...) ggf. mehrere Stechkapillaren gleichzeitig betätigt werden.

Das erfindungsgemäße Probenaufnahmesystem besitzt den Vorteil, daß Ausstechgeschwindigkeiten an Trenngelen von rd. 1000 Proben pro Stunde erzielt werden können. Damit werden herkömmliche Ausstechgeschwindigkeiten mit manuellen oder halbautomatischen Stechvorrichtungen von rd. 200 Proben pro Stunde weit überschritten. Die Probenaufnahme kann automatisiert werden. Die hohe Ausstechgeschwindigkeit besitzt den zusätzlichen Vorteil, daß das Ausstechen z.B. auf einem zweidimensionalen Trenngel mit mehr als 1000 Proteinen beendet werden kann, bevor sich das Trenngel gegebenenfalls zeitabhängig geometrisch verändert und somit eine weitere, reproduzierbare Bearbeitung ausschließt.

## Patentansprüche

1. Probenaufnahmevorrichtung, die zur Aufnahme einer Vielzahl von Proben aus einem Trägermaterial (40) eingerichtet ist,
**dadurch gekennzeichnet, dass**
eine Vielzahl von Trennwerkzeugen (10) zur Entnahme der Proben aus dem Trägermaterial (40) vorgesehen sind, wobei die Trennwerkzeuge (10) an einer Halteeinrichtung (20) angebracht und jeweils mit Betätigungsmitteln (30) versehen sind, mit denen die Trennwerkzeuge (10) separat ansteuerbar und separat beweglich sind.

2. Probenaufnahmevorrichtung gemäß Anspruch 1, bei der die Trennwerkzeuge rohrförmige Stechwerkzeuge (11 bis 18) sind, die an einem Ende axial verschiebbar an dem jeweiligen Betätigungsmittel (31 bis 38) angebracht sind und am anderen Ende eine Stechschneide besitzen.

3. Probenaufnahmevorrichtung gemäß Anspruch 2, bei der die Stechwerkzeuge (11 bis 18) kapillarförmig ausgebildet sind.

4. Probenaufnahmevorrichtung gemäß einem der vorhergehenden Ansprüche, bei der die Betätigungsmittel (30) Pneumatik- oder Hydraulikzylinder (31 bis 38) oder piezoelektrische oder elektromagnetische Auslöseeinrichtungen sind.

5. Probenaufnahmevorrichtung gemäß einem der vorhergehenden Ansprüche, bei der die Trennwerkzeuge (10) reihenförmig oder matrixartig an der Halteeinrichtung (20) angebracht sind.

6. Probenaufnahmevorrichtung gemäß Anspruch 5, bei der die Trennwerkzeuge (10) so angeordnet sind, daß deren Enden eine Anordnung besitzen, die der Anordnung von Probenreservoiren in einem bestimmten Mikrotiterplattenformat entspricht.

7. Probenaufnahmevorrichtung gemäß einem der vorhergehenden Ansprüche, bei der jedes Trennwerkzeug (10) über ein Führungsteil (21) mit dem jeweiligen Betätigungsmittel (30) verbunden ist, wobei jedes Führungsteil (21) eine Anschlußöffnung (21a) aufweist, über die das Trennwerkzeug mit einem Drucksystem verbunden ist.

8. Probenaufnahmevorrichtung gemäß einem der vorhergehenden Ansprüche, bei der die Halteeinrichtung (20) mit einer Stelleinrichtung (200) verbunden ist, mit der die Halteeinrichtung (20) mit den Trennwerkzeugen (10) in einer x-y-Bezugsebene positioniert ist.

9. Probenaufnahmevorrichtung gemäß Anspruch 8, bei der eine Bildaufnahmeeinrichtung (300) und eine Steuereinrichtung (400) vorgesehen sind, wobei die Bildaufnahmeeinrichtung (300) Bilddaten eines Trägermaterials, aus dem Proben entnommen werden sollen, an die Steuereinrichtung liefert, die dazu eingerichtet ist, Zielkoordinaten zur Ansteuerung der Stelleinrichtung (200) zu erstellen.

10. Verfahren zur Probenaufnahme, bei dem aus einem Trägermaterial (40) Proben ausgeschnitten und auf ein Zielsubstrat (50) übertragen werden,
**dadurch gekennzeichnet, daß**
das Ausschneiden der Proben unter Verwendung einer Probenaufnahmevorrichtung (100) mit einer Vielzahl von Trennwerkzeugen (10) durch separate Ansteuerung und Betätigung der Trennwerkzeuge (10) zeitlich sequentiell und die Übertragung der entnommenen Proben auf das Zielsubstrat (50) zeitlich parallel erfolgen.

11. Verfahren gemäß Anspruch 10, bei dem die Probenaufnahmevorrichtung (100) mit einer Stelleinrichtung (200) abwechselnd erst in eine bestimmten Zielkoordinaten entsprechende Position (P1, P2, ...) gefahren und dann eines oder mehrere der Trennwerkzeuge (31 bis 38) betätigt werden, bis alle oder einige Trennwerkzeuge (31 bis 38) mit entnommenen Proben beladen sind, woraufhin die Probenaufnahmevorrichtung (100) zum Zielsubstrat (50) gefahren wird und die Proben aus den Trennwerkzeugen auf das Zielsubstrat (50) übertragen werden.

12. Verfahren gemäß Anspruch 11, bei dem die Zielkoordinaten der Positionen (P1, P2, ...) aus Bildaten des Trägermaterials (40) gewonnen werden.

13. Verfahren gemäß einem der Ansprüche 10 bis 12, bei dem die Trennwerkzeuge (30) mit Druckluft oder einer Druckflüssigkeit betätigt werden.

14. Verfahren gemäß einem der Ansprüche 10 bis 13, bei dem das Trägermaterial ein Trenngel und die Proben im Trenngel verteilte Substanzbanden (41, 42, 43) sind, die auf eine Mikrotiterplatte (50) als Zielsubstrat übertragen werden.

15. Verfahren gemäß einem der Ansprüche 10 bis 14, bei dem die Trennwerkzeuge (30) mit den entnommenen Proben mit einem Unterdruck bzw. zur Übertragung auf das Zielsubstrat mit einem Überdruck beaufschlagt werden.

## Claims

1. Device for collecting samples which is equipped for collecting a multiplicity of samples from a support material (40),
**characterised in that**
a multiplicity of separating tools (10) is provided for removing the samples from the support material (40), the separating tools (10) being fitted on a retaining device (20) and being provided respectively with actuation means (30), by means of which the separating tools (10) are separately controllable and separately movable.

2. Device for collecting samples according to claim 1, in which the separating tools are tubular piercing tools (11 to 18) which are fitted axially displaceably on one end on the respective actuation means (31 to 38) and have a piercing blade at the other end.

3. Device for collecting samples according to claim 2, in which the piercing tools (11 to 18) have a capillary-like configuration.

4. Device for collecting samples according to one of the preceding claims, in which the actuation means (30) are pneumatic- or hydraulic cylinders (31 to 38) or piezoelectric or electromagnetic triggering devices.

5. Device for collecting samples according to one of the preceding claims, in which the separating tools (10) are fitted on the retaining device (20) in rows or in a matrix-like fashion.

6. Device for collecting samples according to claim 5, in which the separating tools (10) are disposed such that their ends have an arrangement which corresponds to the arrangement of sample reservoirs in a specific microtitration plate format.

7. Device for collecting samples according to one of the preceding claims, in which each separating tool (10) is connected to the respective actuation means (30) via a guide part (21), each guide part (21) having a connection opening (21a) via which the separating tool is connected to a pressure system.

8. Device for collecting samples according to one of the preceding claims, in which the retaining device (20) is connected to an adjustment device (200), by means of which the retaining device (20) with the separating tools (10) is positioned in an x - y reference plane.

9. Device for collecting samples according to claim 8, in which an image-recording device (300) and a control device (400) are provided, the image-recording device (300) delivering image data of a support material, from which samples are intended to be removed, to the control device which is equipped for the purpose of generating target coordinates for control of the adjustment device (200).

10. Method for collecting samples, in which samples are cut out of a support material (40) and are transferred onto a target substrate (50),
**characterised in that**
the cutting-out of the samples using a device for collecting samples (100) with a multiplicity of separating tools (10) is effected by separate control and actuation of the separating tools (10) in a temporally sequential manner, and the transference of the removed samples onto the target substrate (50) is effected in a temporally parallel manner.

11. Method according to claim 10, in which the device for collecting samples (100) is moved by an adjustment device (200) alternately firstly into a position corresponding to specific target coordinates (P1, P2, ...) and then one or more of the separating tools (31 to 38) are actuated until all or some of the separating tools (31 to 38) are laden with the removed samples, whereupon the device for collecting samples (100) is moved towards the target substrate (50) and the samples are transferred from the separating tools onto the target substrate (5).

12. Method according to claim 11, in which the target coordinates of the positions (P1, P2, ...) are obtained from image data of the support material (40).

13. Method according to one of the claims 10 to 12, in which the separating tools (30) are actuated with compressed air or a compressed fluid.

14. Method according to one of the claims 10 to 13, in which the support material is a separating gel and the samples in the separating gel are distributed substance bands (41, 42, 43) which are transferred onto a microtitration plate (50) as target substrate.

15. Method according to one of the claims 10 to 14, in which the separating tools (30) with the removed samples are subject to a low pressure or, for transference onto the target substrate, to an excess pressure.

## Revendications

1. Dispositif de prélèvement d'échantillons équipé pour le prélèvement d'une pluralité d'échantillons à partir d'un matériau de base (40), **caractérisé en ce qu'**une pluralité d'outils de découpe (10) pour le prélèvement des échantillons dans le matériau de base (40) sont prévus, les outils de découpe (10) étant disposés sur un dispositif de maintien (20) et étant munis respectivement de moyens d'actionnement (30), avec lesquels les outils de découpe (10) peuvent être commandés séparément et sont mobiles individuellement.

2. Dispositif de prélèvement d'échantillons selon la revendication 1, **caractérisé en ce que** les outils de découpe sont des outils de poinçonnage tubulaires (11 à 18), qui sont disposés à l'une des extrémités de manière à pouvoir être déplacés dans le sens axial sur le moyen d'actionnement respectif (31 à 38) et qui comprennent à l'autre extrémité un tranchant de poinçonnage.

3. Dispositif de prélèvement d'échantillons selon la revendication 2, **caractérisé en ce que** les outils de poinçonnage (11 à 18) ont une forme capillaire.

4. Dispositif de prélèvement d'échantillons selon l'une des revendications précédentes, **caractérisé en ce que** les moyens d'actionnement (30) sont des vérins pneumatiques ou hydrauliques (31 à 38) ou des dispositifs de déclenchement piézoélectriques ou électromécaniques.

5. Dispositif de prélèvement d'échantillons selon l'une des revendications précédentes, **caractérisé en ce que** les outils de découpe (10) sont disposés en forme de lignes ou de matrices sur le dispositif de maintien (20).

6. Dispositif de prélèvement d'échantillons selon la revendication 5, **caractérisé en ce que** les outils de découpe (10) sont positionnés de telle façon que leurs extrémités forment une disposition qui correspond à la disposition de réservoirs d'échantillons dans un certain format de plaques de micro titre.

7. Dispositif de prélèvement d'échantillons selon l'une des revendications précédentes, **caractérisé en ce que** chaque outils de découpe (10) est relié par l'intermédiaire d'une pièce de guidage (21) avec le moyen d'actionnement respectif (30), chaque pièce de guidage (21) comprenant une ouverture de branchement (21a), à l'aide de laquelle l'outil de découpe est relié à un système sous pression.

8. Dispositif de prélèvement d'échantillons selon l'une des revendications précédentes, **caractérisé en ce que** le dispositif de maintien (20) est relié à un dispositif de réglage (200), à l'aide duquel le dispositif de maintien (20) comprenant les outils de découpe (10) est positionné sur un niveau de référence x - y.

9. Dispositif de prélèvement d'échantillons selon la revendication 8, **caractérisé en ce qu'**un dispositif d'enregistrement d'images (300) et un dispositif de commande (400) sont prévus, le dispositif d'enregistrement d'images (300) fournissant des données d'images d'un matériau de base, dans lequel doivent être prélevés des échantillons, au dispositif de commande, qui est équipé pour établir des coordonnées de cibles pour la commande du dispositif de réglage (200).

10. Procédé de prélèvement d'échantillons avec lequel des échantillons sont découpés dans un matériau de base (40) et sont transférés sur un substrat cible (50), **caractérisé en ce que** la découpe des échantillons a lieu selon une chronologie séquentielle en utilisant un dispositif de prélèvement d'échantillons (100) comprenant une pluralité d'outils de découpe (10) et à l'aide d'une commande et d'un actionnement des outils de découpe (10) séparés et **en ce que** le transfert sur le substrat cible (50) des échantillons prélevés a lieu selon une chronologie parallèle.

11. Procédé selon la revendication 10, **caractérisé en ce que** le dispositif de prélèvement d'échantillons (100) est déplacé alternativement à l'aide d'un dispositif de réglage (200) d'abord dans une position (PI, P2, ...) correspondant à des coordonnées de cibles déterminées et **en ce qu'**un ou plusieurs des outils de découpe (31 à 38) sont actionnés jusqu'à ce que tous les outils de découpe ou certains d'entre eux (31 à 38) soient garnis d'échantillons prélevés, le dispositif de prélèvement d'échantillons (100) étant ensuite déplacé vers le substrat cible (50) et les échantillons étant transférés depuis les outils de découpe sur le substrat cible (50).

12. Procédé selon la revendication 11, **caractérisé en ce que** les coordonnées de cible des positions (PI, P2, ...) sont obtenues à partir de données d'images du matériau de base (40).

13. Procédé selon l'une des revendications 10 à 12, **caractérisé en ce que** les outils de découpe (30) sont actionnés au moyen d'air comprimé ou d'un liquide sous pression.

14. Procédé selon l'une des revendications 10 à 13, **caractérisé en ce que** le matériau de base est un gel de séparation et les échantillons sont des bandes de substance (41, 42, 43) réparties dans le gel de séparation, qui sont transférées en tant que substrat cible sur une plaque de micro titre (50).

15. Procédé selon l'une des revendications 10 à 14, **caractérisé en ce que** les outils de découpe (30) comprenant les échantillons prélevés sont soumis à une dépression ou, pour le transfert au substrat cible, à une surpression.
